# EUROPEAN PATENT APPLICATION

(11) **EP 3 979 754 A1**
(43) Date of publication of application: **06.04.2022**
(21) Application number: 21193768.5
(22) Date of filing: 30.08.2021
(51) Int. Cl.: H04W 74/08

(54) **INITIAL ACCESS**

(30) Priority: 02.10.2020 US 202063086850 P
(71) Applicant: Nokia Technologies Oy, 02610 Espoo (FI)
(72) Inventor: AHMADIAN TEHRANI, Amir Mehdi, 85757 Karlsfeld (DE); CAPORAL DEL BARRIO, Samantha, 9000 Aalborg (DK); MUELLER, Axel, 75014 Paris (FR); MASO, Marco, 92130 Issy les Moulineaux (FR)
(74) Representative: Nokia EPO representatives

(57) **Abstract**

There is provided a method at a first radio device, comprising: determining that a random access -procedure between a second radio device and a third radio device is not successful; and informing at least one of the third radio device and the second radio device to trigger a coverage enhancement -procedure for performing the random access -procedure.

## Description

### TECHNICAL FIELD

Various example embodiments relate generally to initial access, such as random access, and coverage enhancement.

### BACKGROUND

Initial access may be used by devices, such as user equipments (UE), to connect with a radio access network. However, it may happen that the UE is too far from an access point or in outage while attempting the initial access. In such case the initial access may fail.

### BRIEF DESCRIPTION

According some aspects, there is provided the subject matter of the independent claims. Some further aspects are defined in the dependent claims.

The embodiments that do not fall under the scope of the claims are to be interpreted as examples useful for understanding the disclosure.

### LIST OF THE DRAWINGS

In the following, the invention will be described in greater detail with reference to the embodiments and the accompanying drawings, in which
Figure 1 presents a communication network, according to an embodiment;
Figure 2 shows a random access procedure, according to an embodiment;
Figures 3, 4 and 5 show methods, according to some embodiments;
Figures 6, 7, and 8 illustrate signaling flow diagrams, according to some embodiments;
Figure 9 depicts radio resource bundling, according to an embodiment; and
Figures 10 and 11 illustrate apparatuses, according to some embodiments.

### DESCRIPTION OF EMBODIMENTS

The following embodiments are exemplary. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments. For the purposes of the present disclosure, the phrases "A or B" and "A and/or B" means (A), (B), or (A and B). For the purposes of the present disclosure, the phrase "A, B, and/or C" means (A), (B), (C), (A and B), (A and C), (B and C), or (A, B, and C). For the purposes of the present disclosure, the phrase "at least one of A, B, and C" means (A), (B), (C), (A and B), (A and C), (B and C), or (A, B, and C). For the purposes of the present disclosure, the phrase A/B/C means (A), (B), (C), (A and B), (A and C), (B and C), or (A, B, and C).

Embodiments described may be implemented in a radio system, such as one comprising at least one of the following radio access technologies (RATs): Worldwide Interoperability for Micro-wave Access (WiMAX), Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, and enhanced LTE (eLTE). Term 'eLTE' here denotes the LTE evolution that connects to a 5G core. LTE is also known as evolved UMTS terrestrial radio access (EUTRA) or as evolved UMTS terrestrial radio access network (EUTRAN). A term "resource" may refer to radio resources, such as a physical resource block (PRB), a radio frame, a subframe, a time slot, a subband, a frequency region, a sub-carrier, a beam, etc. The term "transmission" and/or "reception" may refer to wirelessly transmitting and/or receiving via a wireless propagation channel on radio resources

The embodiments are not, however, restricted to the systems/RATs given as an example but a person skilled in the art may apply the solution to other communication systems provided with necessary properties. One example of a suitable communications system is the 5G system. The 3GPP solution to 5G is referred to as New Radio (NR). 5G has been envisaged to use multiple-input-multiple-output (MIMO) multi-antenna transmission techniques, more base stations or nodes than the current network deployments of LTE (a so-called small cell concept), including macro sites operating in co-operation with smaller local area ac-cess nodes and perhaps also employing a variety of radio technologies for better coverage and enhanced data rates. 5G will likely be comprised of more than one radio access technology / radio access network (RAT/RAN), each optimized for certain use cases and/or spectrum. 5G mobile communications may have a wider range of use cases and related applications including video streaming, augmented reality, different ways of data sharing and various forms of machine type applications, including vehicular safety, different sensors and real-time control. 5G is expected to have multiple radio interfaces, namely below 6GHz, cmWave and mmWave, and being integrable with existing legacy radio access technologies, such as the LTE.

The current architecture in LTE networks is distributed in the radio and centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloud-let, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications). Edge cloud may be brought into RAN by utilizing network function virtualization (NVF) and software defined networking (SDN). Using edge cloud may mean access node operations to be carried out, at least partly, in a server, host or node operationally coupled to a remote radio head or base station comprising radio parts. Network slicing allows multiple virtual networks to be created on top of a common shared physical infrastructure. The virtual networks are then customised to meet the specific needs of applications, services, devices, customers or operators.

In radio communications, node operations may in be carried out, at least partly, in a central/centralized unit, CU, (e.g. server, host or node) operationally coupled to distributed unit, DU, (e.g. a radio head/node). It is also possible that node operations will be distributed among a plurality of servers, nodes or hosts. It should also be understood that the distribution of labour between core network operations and base station operations may vary depending on implementation. Thus, 5G networks architecture may be based on a so-called CU-DU split. One gNB-CU controls several gNB-DUs. The term 'gNB' may correspond in 5G to the eNB in LTE. The gNBs (one or more) may communicate with one or more UEs. The gNB-CU (central node) may control a plurality of spatially separated gNB-DUs, acting at least as transmit/receive (Tx/Rx) nodes. In some embodiments, however, the gNB-DUs (also called DU) may comprise e.g. a radio link control (RLC), medium access control (MAC) layer and a physical (PHY) layer, whereas the gNB-CU (also called a CU) may comprise the layers above RLC layer, such as a packet data convergence protocol (PDCP) layer, a radio resource control (RRC) and an internet protocol (IP) layers. Other functional splits are possible too. It is considered that skilled person is familiar with the OSI model and the functionalities within each layer.

In an embodiment, the server or CU may generate a virtual network through which the server communicates with the radio node. In general, virtual networking may involve a process of combining hardware and software network resources and network functionality into a single, software-based administrative entity, a virtual network. Such virtual network may provide flexible distribution of operations between the server and the radio head/node. In practice, any digital signal processing task may be performed in either the CU or the DU and the boundary where the responsibility is shifted between the CU and the DU may be selected according to implementation.

Some other technology advancements probably to be used are Soft-ware-Defined Networking (SDN), Big Data, and all-IP, to mention only a few non-limiting examples. For example, network slicing may be a form of virtual network architecture using the same principles behind software defined networking (SDN) and network functions virtualisation (NFV) in fixed networks. SDN and NFV may deliver greater network flexibility by allowing traditional network architectures to be partitioned into virtual elements that can be linked (also through software). Network slicing allows multiple virtual networks to be created on top of a common shared physical infrastructure. The virtual networks are then customised to meet the specific needs of applications, services, devices, customers or operators.

The plurality of gNBs (access points/nodes), each comprising the CU and one or more DUs, may be connected to each other via the Xn interface over which the gNBs may negotiate. The gNBs may also be connected over next generation (NG) interfaces to a 5G core network (5GC), which may be a 5G equivalent for the core network of LTE. Such 5G CU-DU split architecture may be implemented using cloud/server so that the CU having higher layers locates in the cloud and the DU is closer to or comprises actual radio and antenna unit. There are similar plans ongoing for LTE/LTE-A/eLTE as well. When both eLTE and 5G will use similar architecture in a same cloud hardware (HW), the next step may be to combine soft-ware (SW) so that one common SW controls both radio access networks/technologies (RAN/RAT). This may allow then new ways to control radio resources of both RANs. Furthermore, it may be possible to have configurations where the full protocol stack is controlled by the same HW and handled by the same radio unit as the CU.

It should also be understood that the distribution of labour between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future rail-way/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). Each satellite in the mega-constellation may cover several satellite-enabled network entities that create on-ground cells. The on-ground cells may be created through an on-ground relay node or by a gNB located on-ground or in a satellite.

The embodiments may be also applicable to narrow-band (NB) Internet-of-things (loT) systems which may enable a wide range of devices and services to be connected using cellular telecommunications bands. NB-IoT is a narrowband radio technology designed for the Internet of Things (loT) and is one of technologies standardized by the 3rd Generation Partnership Project (3GPP). Other 3GPP loT technologies also suitable to implement the embodiments include machine type communication (MTC) and eMTC (enhanced Machine-Type Communication). NB-IoT focuses specifically on low cost, long battery life, and enabling a large number of connected devices. The NB-IoT technology is deployed "in-band" in spectrum allocated to Long Term Evolution (LTE) - using resource blocks within a normal LTE carrier, or in the unused resource blocks within a LTE carrier's guard-band - or "standalone" for deployments in dedicated spectrum.

The embodiments may be also applicable to device-to-device (D2D), machine-to-machine, peer-to-peer (P2P) communications. The embodiments may be also applicable to vehicle-to-vehicle (V2V), vehicle-to-infrastructure (V2I), infrastructure-to-vehicle (12V), or in general to V2X or X2V communications.

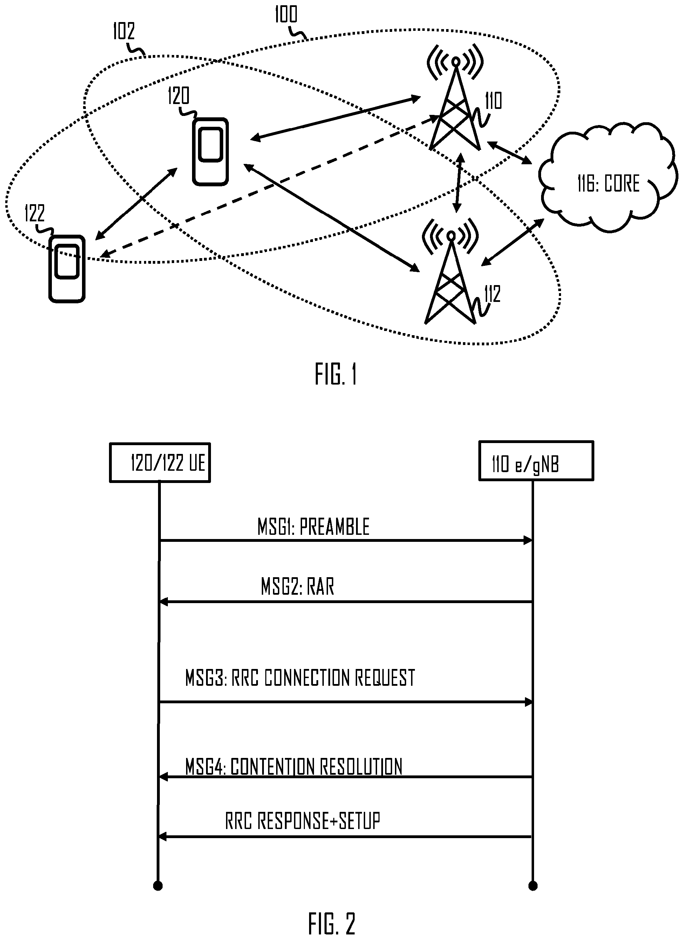

Figure 1 illustrates an example of a communication system to which embodiments of the invention may be applied. The system may comprise a control node 110 providing one or more cells, such as cell 100, and a control node 112 providing one or more other cells, such as cell 102. Each cell may be, e.g., a macro cell, a micro cell, femto, or a pico cell, for example. In another point of view, the cell may define a coverage area or a service area of the corresponding access node. The control node 110, 112 may be an evolved Node B (eNB) as in the LTE and LTE-A, ng-eNB as in eLTE, gNB of 5G, or any other apparatus capable of controlling radio communication and managing radio resources within a cell. The control node 110, 112 may be called a base station, network node, or an access node.

The system may be a cellular communication system composed of a radio access network of access nodes, each controlling a respective cell or cells. The access node 110 may provide user equipment (UE) 120 (one or more UEs) with wireless access to other networks such as the Internet. The wireless access may comprise downlink (DL) communication from the control node to the UE 120 and uplink (UL) communication from the UE 120 to the control node.

Additionally, although not shown, one or more local area access nodes may be arranged such that a cell provided by the local area access node at least partially overlaps the cell of the access node 110 and/or 112. The local area access node may provide wireless access within a sub-cell. Examples of the sub-cell may include a micro, pico and/or femto cell. Typically, the sub-cell provides a hot spot within a macro cell. The operation of the local area access node may be controlled by an access node under whose control area the sub-cell is provided. In general, the control node for the small cell may be likewise called a base station, network node, or an access node.

There may be a plurality of UEs 120, 122 in the system. Each of them may be served by the same or by different control nodes 110, 112. The UEs 120, 122 may communicate with each other, in case D2D communication interface is established between them.

The term "terminal device" or "UE" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

In the case of multiple access nodes in the communication network, the access nodes may be connected to each other with an interface. LTE specifications call such an interface as X2 interface. For IEEE 802.11 network (i.e. wireless local area network, WLAN, WiFi), a similar interface Xw may be provided between ac-cess points. An interface between an eLTE access point and a 5G access point, or between two 5G access points may be called Xn. Other communication methods between the access nodes may also be possible. The access nodes 110 and 112 may be further connected via another interface to a core network 116 of the cellular communication system. The LTE specifications specify the core network as an evolved packet core (EPC), and the core network may comprise a mobility management entity (MME) and a gateway node. The MME may handle mobility of terminal devices in a tracking area encompassing a plurality of cells and handle signalling connections between the terminal devices and the core network. The gateway node may handle data routing in the core network and to/from the terminal devices. The 5G specifications specify the core network as a 5G core (5GC), and there the core network may comprise e.g. an access and mobility management function (AMF) and a user plane function/gateway (UPF), to mention only a few. The AMF may handle termination of non-access stratum (NAS) signalling, NAS ciphering & integrity protection, registration management, connection management, mobility management, access authentication and authorization, security context management. The UPF node may support packet routing & forwarding, packet inspection and QoS handling, for example.

Use of relay UEs, which can receive data from the gNB 110 and forward it to the UEs 120 (and other way around), has been identified in 3GPP as a solution to radio range extension in mobile broadband. Similarly, a UE-to-Network relay (often simply referred to as the relay UE) framework has been specified, where a UE can provide connectivity to other UEs (called remote UEs) experiencing cover-age problems. In this context, the relay UE may utilize a direct interface called SideLink (SL, "PC5") to communicate with remote UE(s). For example, in Figure 1, the UE 120 may act as a relay UE for the (remote) UE 122. In that assumption, the remote UE 122 may have poor radio link (depicted with a bi-directional dashed arrow in Figure 1) to the base station 110, or the downlink (DL) coverage may be sufficient but the uplink (UL) coverage may be insufficient.

The remote UE 122 should identify the presence of at least one suitable relay UE 120 to request relay service in its proximity. To enable identification, the relay UE 120 may announce its presence by transmitting PC5 discovery messages periodically and/or the remote UE 122 may announce PC5 discovery solicitation messages, expecting the relay UE 120 nearby to respond. Once the remote UE 122 detects the relay UE candidate(s), it selects one relay that satisfies the following two criteria: the SL radio quality towards the candidate is sufficiently good; and the candidate can provide the connectivity service desired by the remote UE. The remote UE 122 may evaluate the former condition by performing measurements on the discovery messages received from the candidate, and it may check the latter condition by referring to the field, relay service code included in the discovery messages provided by the candidate. During such relay discovery, the remote UE 122 may obtain the UE ID of the relay UE 120 to be used for SL transmission and reception of the relayed traffic.

Conventionally, relaying systems can be classified as decode-and-forward where the relay UEs regenerate the signal by demodulating and re-modulating it prior to retransmission, or as amplify-and-forward where relay UEs act similar to analogue repeaters.

One of the channels characterised by coverage challenges, especially at frequency range 2 (FR2), is the so called physical random-access channel (PRACH or simply RACH). One of the PRACH procedures is the so-called contention based random access (CBRA) -procedure. This procedure can be articulated in two or four steps, depending on a higher-layer configuration. In this application, the focus is on the 4-step variant, although the proposed solution is applicable to 2-step variant as well. In the following, random access is abbreviated as RA.

During initial access, RA procedure takes place after a preliminary set of operations is performed by both the gNB and the UE, such as the gNB 110 and the UE 120, for example. The preliminary set of operations comprises e.g. DL synchronization signal block (SSB) beam sweeping. In this step, the gNB 110 sends a sequence of beamformed SSBs. The UE 120 then measures a reference signal received power (RSRP) for all received SSB beams using a certain receive (RX) beam. Finally, the UE 120 selects an index of the preferred SSB and decodes its content, such as a master information block (MIB) and/or a system information block 1 (SIB1).

Let us briefly take a look at a common RA process shown in Figure 2 between the UE 120 and the gNB 110. Although applicable to many networks, we will in the following examples focus mainly on 5G (NR), for the sake of simplicity.

In the CBRA process, showed in Figure 2, the UE 120 selects one of available PRACH preambles out of maximum 64 available preambles based on the selected SSB beam index in beam sweeping procedure and sends it to gNB using a specific time and frequency resource known as random access -occasion (RO) in a message (Msg) 1 to the gNB 110. The UE 120 also needs to provide identity to the network so that network can address it in next step. The identity which the UE will use is called RA-RNTI (random access radio network temporary identity).

In the next step, the gNB 110 detects the preamble, calculates both the temporary C-RNTI associated to the RO over which the preamble has been received and a timing advance (TA), and sends a PUSCH uplink grant to the UE. This is called a random access -response (RAR), which is sent as Msg2 addressed to UE 120 with the relevant RA-RNTI. Msg2 may by default carry the following information: temporary C-RNTI, which is another identity given to the UE 120; TA value, which provides means for the UE to compensate for the roundtrip delay caused by UE's distance from the gNB 110; and an UL grant resource, which is assigned as an initial resource to UE so that it can use a physical uplink shared channel (PUSCH).

Then, by using the uplink shared channel, the UE 120 sends Msg3 to the network over the scheduled uplink resource on PUSCH. This Msg3 may be called "RRC connection request message". At this point the UE 110 is identified by the temporary C-RNTI.

Thereafter, the gNB may send Msg4 to the UE for contention resolution. After the RRC connection request of Msg3 is processed, a RRC response will be sent by gNB 110 to the UE 120. In an embodiment, although not shown, the RRC message (e.g. the RRC Connection Setup message) may be multiplexed with the Msg4 (i.e. sent with the MAC contention resolution CE). In some examples, the CBRA procedure may also be used when the UE is in CONNECTED state. In that case, the Msg3 may contain a valid UE identity (C-RNTI) which identifies the UE and the gNB may respond to the UE in Msg4 directly with the C-RNTI.

With the contention based -RA process, there is some possibility that multiple UEs send PRACH with identical signatures. This may mean the same PRACH preamble from multiple UE reaches the network (e.g. gNB) at the same time. Due to such overlap/collision, the RACH process for one or more of the UEs simultaneously attempting the RACH process with the same preamble may fail. Due to this, the network may need to rely on the contention resolution of Msg4. The UEs that have lost the contention, i.e., collision due to selecting the same preambles from different UEs at the same time, may repeat the RA procedure

However, there is another possibility to avoid collisions. In an embodiment, there are dedicated preambles for the UE to use. The network may have informed the UE which preamble signatures it should use. This kind of RACH process is called the contention free random access (CFRA) procedure. In such case, the UE sends a dedicated preamble (after selecting one from a pool of dedicated preambles) and the network responds with random access response (RAR, see Msg2 above). The contention free RA process may ensure that there are no two UEs using the same preamble at the same time, thus avoiding collisions and contention resolution. The CFRA is within the scope of the application, although the description is written from the point of view of the CBRA. For example, when referring to Msg1 transmission in CBRA below when explaining some of the embodiments, the Msg1 could be Msg1 of CFRA.

The above-mentioned RO is a resource specified in time and frequency domain available for the transmission of RACH preamble. E.g. in 3GPP new radio (NR/5G), SSB indices are associated with ROs via higher-layer signalling. Mapping flexibility is quite large, in order to accommodate different network deployments and loads. For example, the mapping between SSB and RO may be defined mainly by two parameters: SSB-perRACH-OccasionAndCB-PreamblePerSSB which specifies the number of SSBs mapped to one RO and the number of preamble indices associated with a single SSB; and msg1-FDM which specifies the number of ROs in frequency domain. Regardless of how the mapping is configured, upon reception of the cell-specific RACH configuration, each UE knows which preambles can be chosen for transmission in which RO, when the selection of an SSB beam has been performed. The gNB 110 can then perform preamble reception and detection with no ambiguity.

One of the main design goals of NR Rel-15 has been to achieve high throughput in dense urban macro environments with small/mid-ranges. Utilizing high frequencies such as at least 28 GHz in FR2 on the one hand and dedicating more spectrums on FR1 on the other hand, provides significant impacts (e.g. due to high path loss) on the quality of service (QoS) of typical voice or low-rate data services. One of the main impacts is ensuring coverage enhancements based on newly allocated spectrums as described for FR1 and FR2. Any enhancement specified in the context of this activity should support a plethora of heterogeneous scenarios. For example, sufficient coverage should be guaranteed not only for urban scenarios (serving an indoor UE by an outdoor gNB), but also for long range cover-age scenario, in which high throughput could be delivered to UEs located in more remote areas.

As said, one channel affected by the low coverage of FR2 may be PRACH. With poor link coverage for RA procedure in both UL and DL or only in one of those (such as UL), may affect the UEs ability to connect to the network. As the distance between the UE, such as the remote UE 122, and gNB 110 increases, successful RACH procedure becomes less likely. An unsuccessful RACH due to increasing path loss with distance affects not only the reception of the Msg1 but more often than not leads to incorrectly decoding Msg3, thus limiting the cell size. Thus, NR cover-age for RACH preamble format limits the range at which a UE will be able to connect to a given gNB.

Some of the problems may arise when the UE's 122 distance to the gNB 110 is large (relative to the coverage of the cell 100 or of the UL coverage of the UE 122) and the UE 122 decides to initiate RACH. In such case, the gNB 110 may not be able to decode RACH Msg1/Msg3 and the RACH fails. This may be due to at least one of the following:
- because UE power is not sufficiently high for gNB to decode Msg1 as UE distance increases
- because the required RSRP measurement for RACH exceeds its threshold as the UE increases its distance
- because after the UE sends RACH Msg1 and receives Msg2 from the gNB, the gNB may not be able to decode RACH Msg3 and the RACH fails
- because the UE power is not sufficiently high for gNB to decode Msg3, as the UE increases its distance right after receiving Msg2
- because the channel quality is or becomes poor without any coverage extension policy

Thus, one of the problems is about how to increase the likelihood of successful RACH Msg1/Msg3 initialization to avoid unsuccessful link establishment and/or waste of resources, as the distance between the UE 122 and the gNB 110 increases. To at least partially tackle this problem, there is proposed a solution to improve success likelihood of completing the RACH procedure between the remote UE 122 and the gNB 110 by means of a relay node 120, without tunnelling the RACH procedure messages through the relay node 120. The tunnelling typically significantly reduces the battery of the relay node 120 and may advantageously be avoided in the proposed solution. Therefore, the proposed approach of changing the RACH procedure to a high coverage mode, by means of a relay node 120 that has knowledge of both the out-of-range UE 120 and the gNB 110, is different from the state of the art solutions, which focus on transporting/tunnelling a "payload", i.e., the data itself, via a relay node. Although applicable to many networks, we will in the following examples focus on 5G, for the sake of simplicity.

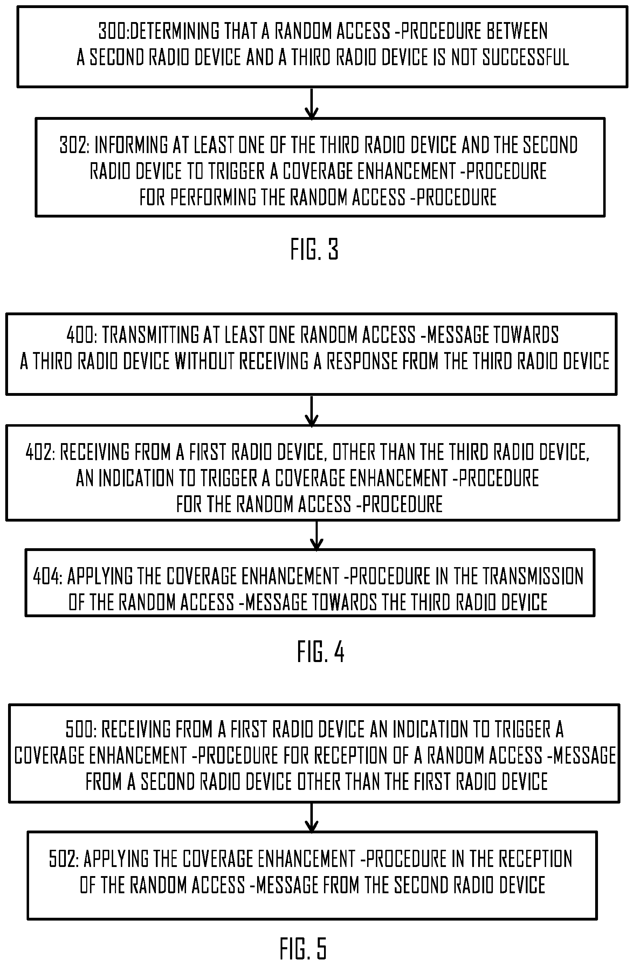

Figure 3 depicts an example method. The method may be performed by a network device, such as the relay node 120. It needs to be noted that the term "relay UE" is used here to separate from the remote UE, while the actions of the relay UE need not comprise relaying any messages but rather assisting in the procedure by triggering the coverage enhancement (CE) procedure, as will be explained. Therefore, the relay UE could be called an assisting device, assisting node or assisting UE, for example.

It needs to be noted that although the description mainly uses the relay node 120, the remote UE 122 and the gNB 110 as the radio devices performing the steps of some of the Figures, these are merely examples, and the radio devices may be any radio devices, such as UEs, drones, UAVs, base stations, etc. For example, the actions performed by the relay node 120 may instead be performed by another gNB (e.g. remote UE 122 tries to access gNB 110 and another gNB assists in the access procedure by acting as the relay/assisting node). As another example, the actions performed by the gNB 110 may instead be performed by another UE. This may be the case when device-to-device communications are to be established between two UEs (e.g. remote UE 122 and the other UE), while being assisted by the relay node/UE 120 or a gNB. In yet one embodiment, the relay node 120 may be a IAB (an integrated access backhaul) node. Such IAB node may be, for example, deployed by an operator in a consumer home for coverage enhancement. In one embodiment, the relay node 120 and/or the gNB 110 is a WiFi device. However, for simplicity, let us consider in the following that radio devices are the relay UE/node 120, the remote UE 122 and the gNB 110.

Although the proposed solutions are described in connection of RA procedure, any other initial access procedure may be used instead, while keeping the proposed solution. Furthermore, although described in connection of initial access procedure, such as the RA procedure, the embodiments are applicable to be used for an RRC connected remote UE where the CE process is to be triggered. However, for the sake of simplicity, RA process is used in the description. Further, it is known that once connected, both the UE and the gNB may use beam management (BM) operations, such as beamforming, to increase coverage. As such, initial access in an RRC idle mode is more difficult because it is performed with relatively broad beams, and no explicit BM procedures take place. E.g. for idle mode UE, there are currently no BM operations available for msg1/3 transmission during RACH.

As shown in Figure 3, a first radio device, e.g. the relay node 120, may in step 300 determine that a RA procedure between two radio devices, e.g. the remote UE 122 and the gNB 110, is not successful. Consequently, in step 302, the relay node 120 informs at least one of the gNB 110 and the remote UE 122 to trigger a CE procedure for performing the RA procedure. In one embodiment, the relay node 120 informs only the remote UE 122 to trigger coverage enhancement (CE). In another embodiment, the relay node 120 informs only the gNB 110 to trigger CE. In yet one embodiment, the relay node 120 informs both the remote UE 122 and the gNB 110 to trigger CE. In cases where only one is informed, the informed entity (e.g. the gNB 110) may inform the other entity (e.g. the remote UE 122) to trigger CE. This may be possible as the gNB 110 may have larger coverage in DL than the remote UE 122 has in UL. As such, RACH improvement may be achieved by means of the relay node 120 observing the unsuccessful RACH attempts of the remote UE 122 and triggering usage of coverage enhanced RACH procedure in both of or at least in one of the remote UE 122 and the gNB 110.

The determining of step 300 may be, in an embodiment, based on detecting at least one RA message 1, Msg1, from the remote UE 122 without a corresponding response message from the gNB 110. The corresponding response may be Msg2 from the gNB 110 to the remote UE 122. Alternatively, or in addition to, the determining of step 300 may be based on detecting at least one RA message 3, Msg3, from the remote UE 122 without a corresponding response message from the gNB 110. The corresponding response may be Msg4 from the gNB 110 to the remote UE 122.

In yet one embodiment, the determination of step 300 may be based on detecting the same preamble (Msg1) from the UE 122 in the same random access - occasion (RO) multiple times, and Msg2 is observed multiple times. This may indicate that the DL coverage is poor and the remote UE 122 does not receive the response message (Msg2). Same can be applied also for Msg3-Msg4 failure detection.

In an embodiment, the determination is based on detecting (and possibly decoding) all Msgls and a corresponding response Msg2, but not detecting Msg 3 in any of the Msg3 UL grant(s) indicated in the Msg2.

Yet, in one embodiment, Msg1, Msg2, and Msg 3 are detected but Msg4 is not observed, even after the number of Msg3 repetitions (as given in the Msg2/RAR) is reached. This may mean that Msg3 cannot be correctly demodulated by the receiving gNB 110, which is an indication of RA failure.

In an embodiment, the determining of step 300 is at least partially based on a threshold defining how many RA messages without a response need to be detected in order for the RA procedure to be determined as not successful. This information of such a threshold may be received from the gNB 110 (or from other network device) in a system information block (SIB), for example, or it may be pre-coded to the memory of the relay node 120. In an embodiment, the threshold is one. In another embodiment, the threshold is an integer number larger than one. For example, the threshold may be set to be the same value as preambleTransMax field of SIB1 that is broadcast by the gNB 110 as part of RACH-ConfigGeneric IE. One benefit of this may be that it may not influence the behaviour of non-coverage enhanced RA procedure. Any combination of any of described determination options is applicable as well.

For the relay node 120 to detect RA messages (e.g. Msg1), it is beneficial for the relay node 120 to know the random access -occasions (ROs) reserved for transmission of a RA preamble. As said, ROs are defined by specific time and frequency resources reserved for the UEs to transmit Msg1 in UL, and certain ROs may be associated with a certain SSB index. In an embodiment, the relay node 120 may acquire information on ROs that are associated with the remote UE 122. The acquiring may take place by receiving information indicating the ROs from the gNB 110 and/or from the remote UE 122. The information may be based on e.g. the SSB index the remote UE 122 has selected, i.e. the information may indicate the ROs directly, or indicate the SSB index the UE has selected and the relay node 120 may know the mapping between SSB index and ROs. In an embodiment, the relay node 120 may determine ROs from scanning SSBs transmitted by the gNB 119. Then, the determining of step 300 may be at least partially based on monitoring RA messages (e.g. Msg1) during the determined ROs.

In an embodiment, the relay node 120 detects no response to MSg1, and informs the remote UE to start CE for sending Msg3 on the RO(s).

In case the relay node 120 has detected Msg2 from the network 110, the relay node 120 may extract from this Msg2 the UL PUSCH slot/symbols allocated to the remote UE 122 for transmission of Msg3. Then the relay node 120 may monitor Msg3 messages during those slot/symbols in the determination step of step 300.

For the relay node 120 to identity the remote UE 122 sending the RA message, the relay node 120 has many options. In one embodiment, the identifying is based on keeping track of preambles (Msgls) which encapsulates the RA preamble ID (RAPID) and the timing with respect to the SSB blocks specifying the RA-RNTI (i.e. the timing with respect to the SSBs specifies the RA-RNTI). Thus, by using a correlation detector measuring the sequence and timings of the preambles, the relay node 120 can track the power of the observed correlations peaks to identify the remote UE 122 corresponding to a specific RAPID, RA-RNTI. Once the power of the observed correlations peaks is no longer raising (access UEs no longer increases power transmission of the Msg1) and the required threshold is met with respect to the number of RA messages detected without a response, the relay node 120 may conclude that the remote UE 122 corresponding to {RAPID, RA-RNTI} is in RACH outage.

In another embodiment, the relay node 120 may detect the same preamble being observed in the same RO and use this for identification of the remote UE 122. Typically, the same preamble is sent by the same remote UE 122, during a round of unsuccessful RACH attempts. For example, the remote UE 1222 picks one preamble randomly and then transmits that. If it does not work (no Msg2 response), the remote UE 122 may increase power and try again. This may go on until the max. count of repetitions and/or max power is reached. This behaviour may be used by the relay node 120 to identify unsuccessful RACH in remote UEs 122. When the remote UE 122 tries again (if not using our solution) a new preamble id is randomly chosen. However, with the proposed method, the remote UE 122 may keep the same preamble and use CE for transmission.

The relay node 120 need not listen to all preambles being sent in the cell 100. The relay node 120 may try to listen for as many RA preambles as possible in the coverage range of the relay node 120, which may be significantly smaller than the area of the cell. The relay node 120 is also not required to be covering all messages. In an embodiment, the relay node 120 monitors only a subset of all RA preamble root sequences, or a subset of RO. The size of the subset, e.g. the time and frequency resources used for monitoring, may be predefined. This may be beneficial from the point of view of UE' battery consumption. Further, in an embodiment, the relay node 120 is limited to listening to the RA occasions that are derived from the SSBs that the relay node 120 can decode from the gNB 110. This may comprise e.g. 2-3 SSB beams and in one embodiment only the strongest SSB beam. Moreover, the number of Msg3s to listen may in an embodiment also be reduced, since those resources are required to be associated with the RA preambles used in Msgls (and to the corresponding Msg2s received from the gNB 110).

Now, after the relay node 120 has detected that the RA process is unsuccessful for a certain remote UE 122 (which can be identified among a plurality of remote UEs), the relay node 120 may in step 302 trigger CE at one or both of the gNB 110 and the remote UE 122 in step 302.

In one embodiment, the relay node 120 can observe an explicit request from the remote UE 122 for coverage enhancement triggering via usage of a special (predetermined) preamble by the remote UE 122. This may verify that the CE is indeed to be triggered. For example, the remote UE 122 may not reach in uplink to the gNB 110, so the relay node 120 may trigger the CE at the gNB 110, by sending a signaling to the gNB 110.

There are several ways to trigger the CE at the gNB 110 by the relay node 120. If the relay node 120 is RRC_connected to the gNB 110, one or more of the following alternatives can be used to trigger CE (also called CovEnhRACH) to the gNB 110:
- UEAssistanceinformation in medium access control (MAC) protocol data unit (PDU).
- A new MAC control element (CE).
- The gNB 110 periodically/upon failed RACH asks for information on hidden UEs (there may be a prerequisite that the relay UE has communicated via UECapabilitylnformation the capability to report hidden/remote UEs.
- Uplink control information (UCI).
- New signaling such that the relay node 120 may send a special predefined signaling, reserved for indicating triggering of the CE procedure, towards the gNB 110. The signaling may be e.g. from a preconfigured set of preambles, reserved for informing that the remote UE 122 requires a CE mode to be triggered on.

If the relay node 120 is in RRC_idle mode or in RRC inactive mode, and not in RRC_connected mode with the gNB 110, then at least the last alternative is applicable to be used for triggering the CE at the gNB 110.

In each case, the relay node 120 may inform the gNB 110 which remote UE 122 (e.g. based on the determined preamble ID and beam-index) is making the CoverageEnhRACH request.

There are several ways to trigger the CE at the remote UE 122 by the relay node 120. If we assume that the relay is a gNB, one or more of the following alternatives can be used to trigger CovEnhRACH at the remote UE 122.
- Connect to the remote UE 122 as a base station and trigger the CE by use of RRC configuration/MAC CE/DCI
- New MIB/SIB/RMSI information element to send to the remote UE 122.
- New signaling: the relay node 120 may send a message to the remote UE 122 by using a direct (e.g., PC5) or indirect (via Msg2 with special content, Msg4 with special content, etc.) SideLink channel to have the CE triggered at the remote UE 122.

If the relay node is a relay UE 120, then at least the last alternative is applicable to be used for triggering the CE at the remote UE 122.

Figure 4 shows the proposed method from the point of view of a second radio device, which in this example, for the sake of simplicity, is the remote UE 122. In step 400, the remote UE 122 transmits at least one RA message (Msg1 and/or Msg3) towards the gNB 110 without receiving a corresponding response (Msg2 and/or Msg4) from the gNB 110. In step 402, the gNB 110 receives from the relay node 120 an indication to trigger a CE procedure for the RA procedure (i.e. use CE for the RACH process). In step 402, the remote UE applies the CE procedure in the transmission of a RA message (Msg1 and/or Msg3) towards the gNB 110.

Figure 5 shows the proposed method from the point of view of a third radio device, which in this example, for the sake of simplicity, is the gNB 110. In step 500, the gNB 110 receives from a relay node 120, or directly from a remote UE 122, an indication to trigger the CE procedure for reception of a RA message (Msg1 and/or Msg3) from the remote UE 122. Consequently, in step 502, the gNB 110 applies the CE procedure in the reception of the RA message from the remote UE 122. In an embodiment, the gNB 110 may transmit an indication to the remote UE 122 to trigger CE procedure at the remote UE 122 for the transmission of the RA message.

Let us know take a look at what the CE mode at the remote UE 122 and at the gNB 110 may comprise.

In one embodiment, informing the gNB 110 to trigger the CE procedure causes the gNB 110 to increase beam gain of the beam corresponding to the remote UE 122. E.g. the gNB 110 may increase beam gain for the uplink reception beam towards the remote UE 122 and/or increase the beam gain of the transmit beam towards the remote UE 122.

In one embodiment, informing the gNB 110 to trigger the CE procedure causes the gNB 110 to monitor for RA message aggregation over several radio resources. In one embodiment, the gNB 110 monitors all ROs relevant for the cell. In some examples, the gNB 110 monitors the ROs even without being requested to do by the relay node 120. In an embodiment, the radio resources may comprise several ROs, several symbols and/or several slots. E.g. the gNB 110 assumes to be receiving RO or PUSCH slot/symbol repetitions when the Coverage Enhanced RACH (CovEnhRACH) procedure is triggered. For example, the gNB 110 may start listening and decoding aggregated Msgls during the aggregated ROs and reply with Msg2, and/or the gNB 110 may start listening and decoding aggregated Msg3s during the aggregated slots/symbols and reply with Msg4. For Msg3, the gNB 110 may be informed or it may determine the slots/symbols associated with the remote UE 122 attempting to send Msg3, so as to aggregate over correct slots/symbols. Thus, a direct coverage enhancement of the RA message may be achieved by aggregation of the RA message over a plurality of already allocated radio resources, such as ROs and/or allocation of additional ROs. Using more ROs to repeat the same RA message and the gNB 110 accumulating the received samples from all these ROs may improve link budget.

In a related embodiment, informing the remote UE 122 to trigger the CE procedure causes the remote UE 122 to perform a transmission of a RA message (Msg1 and/or Msg3) in several ROs/slots/symbols. Then the remote UE 122 may transmit the RA message in several ROs/slots/symbols. Without being requested to do so, the remote UE 122 might send the RA message only in one RO/slot/symbol.

In an embodiment, the transmission of the RA message in several radio resources comprises bundling of ROs. In an embodiment, the transmission of the RA message in several ROs comprises repeating the RA message in all bundled ROs. In another embodiment, the transmission of the RA message in several ROs comprises extending the RA message sequence to cover all bundled ROs, such that the single RA message may be extended to cover many ROs.

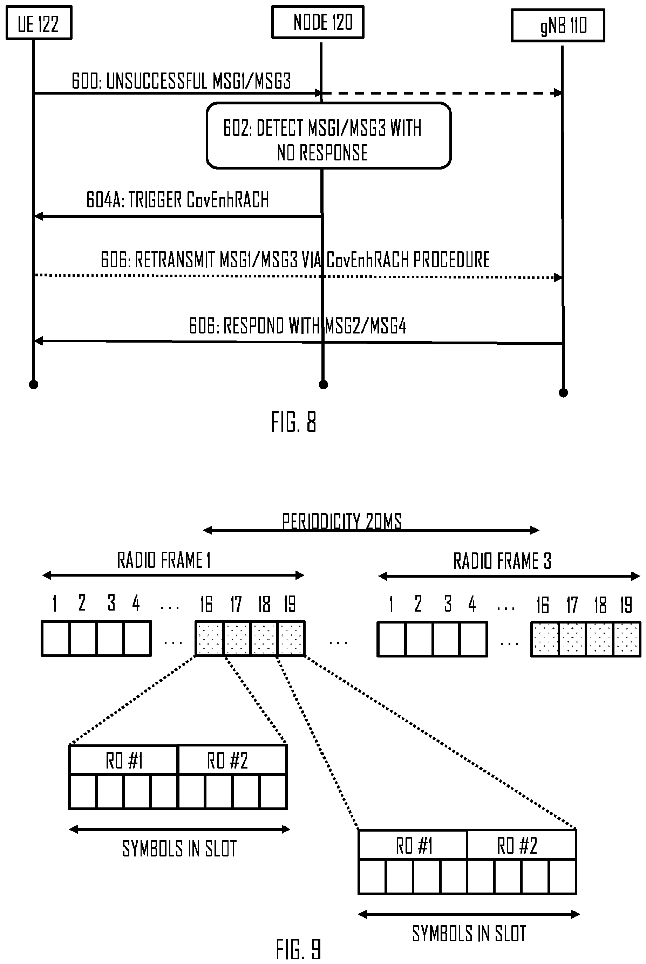

Such RO bundling is shown in Figure 9. A radio frame 1 has 20 slots out of which the last four are useable for the UL. Out of these some or all may be useable for PRACH. E.g. slot #16 comprises two RO occasions, each with 4 symbols. Also slot #20 is used for the PRACH. These two PRACH slots may be bundled together and used for RA message transmission in the CE procedure. The gNB 110 may then monitor both slots for RO aggregation. I.e. the RO aggregation may be over a plurality (here two) PUSCH slots repeating the same ROs (in this example RO#1 & RO#2). This may become important when the gNB 110 does the RO aggregations, as the gNB 110 must not change the RX beam direction(s) in between. Figure 9 shows two bundles slots only as an example, while the number of bundles PUSCH slots/ROs may vary from this depending on configuration. Figure 9 also shows that the periodicity of the ROs may be e.g. 20ms, which is a non-limiting example value.

In an embodiment, the several ROs to be used for the transmission of the RA message are based on a beam index of the SSB selected by the remote UE 122 for the RA procedure. I.e. the selected SSB is associated with certain available uplink PRACH ROs, and at least some of the ROs are then used for the bundling. Therefore, in an embodiment, the gNB 110 may transmit (e.g. broadcast to the cell) an indication about random access -resources usable for the RO aggregation. This may be transmitted in each SSB, for example. The ROs may be SSB-specific, i.e. each SSB may indicate its own ROs which may or may not be different.

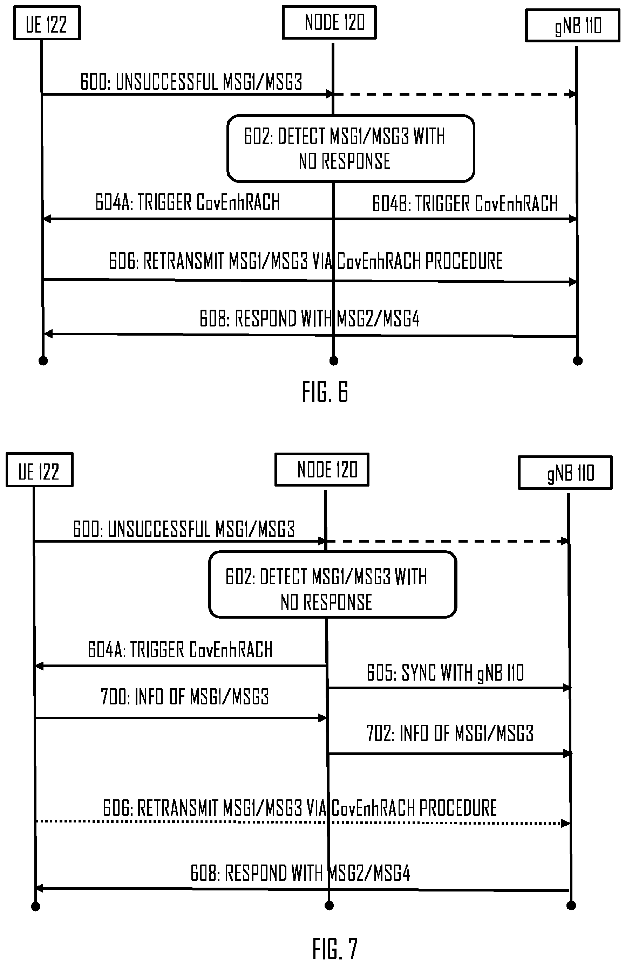

Let us now take a look at Figure 6 which shows an example of triggering (Msg1)CovEnhRACH procedure for Msg1. As it can be seen, the remote UE 122 sends in step 600 at least one Msg1 on a RO determined based on a detected SSB (e.g. the strongest SSB beam). However, this or these Msgls do not reach the gNB 110 but it/they do reach the relay node 120. In step 602, the relay node 120 detects that a response message Msg2 is not received (possibly after sensing multiple Msgls) .

In step 604A, the relay node 120 informs the remote UE 122 to activate CovEnhRACH. The activation of the CE may mean that the gNB is monitoring for Msg1 transmissions in a plurality of ROs for RO aggregation. The informing may be e.g. via PC5 signalling. Activating the CE may mean e.g. bundling the ROs for Msg1 transmission and/or increasing transmit power. The relay node 120 may have identified the correct remote UE 122 sending the Msg1 e.g. from RAPID and/or RA-RNTI.

In step 604B the relay node 120 informs the gNB 110 to activate CovEnhRACH. The informing may be e.g. via a new signaling or a UEAssistancelnfor-mation MAC PDU. The relay node 120 knows the intended gNB 110 as it is the ac-cess point of the cell where both the remote UE 122 and the relay node 120 locate. In an embodiment, it is the nearest gNB to the relay node 120. In an embodiment, the relay node 120 is in a different cell than the remote UE 122. In this case, the relay node 120 sends the CovEnh request to the remote UE's cell's gNB.

After this, in step 606, the remote UE 122 transmits the Msg1 by using the CE procedure. Owing to the activation of the CE procedure, the Msg1 may reach the gNB 110 and in step 608 the gNB 110 may respond with Msg2. The RA procedure may continue in the CE procedure so that Msg3 and Msg4 are successfully transmitted as well.

After the RA procedure is successful, the UE 122 is in RRC connected mode with the gNB 110 and e.g. beam management operations may take place to keep the connection on, even without data bundling, for example.

Although explained for Msg1 and Msg2, the procedure of Figure 6 is applicable to Msg3 transmission as well. If the relay UE120 detects an unsuccessful RACH due to not receiving Msg3 (the relay node 120 may look for Msg3(s) in time frequency resources indicated in Msg2), it may trigger (Msg3)CovEnhRACH request to both the gNB 110 and the remote UE 122 (steps 604A, 604B). The remote UE 122 initiates CovEnhRACH by aggregation of Msg3 over a plurality of PUSCH slot allocation. This PUSCH slot/symbols transmission may be done via using more slots/symbols to repeat Msg3, which leads to accumulating more samples by the gNB 110 to improve budget link.

In one embodiment, shown in Figure 7, the remote UE 122 initiates CovEnhRACH via the relay node 120. In this Figure, it is shown that the relay node 120 detects unsuccessful RA procedure in step 602 and in step 604A indicates the same to the remote UE 122 by triggering the CE mode. In step 605, the relay node 120 may connect with the gNB 110. This may comprise performing RACH process between relay node 120 and the gNB 110. In some embodiments, step 605 is not needed.

In step 700, the remote UE 122, after receiving the indication to trigger the CE procedure from the relay node 120, transmits to the relay node 120 an indication of a beam index useable for transmission of the RA message. This beam index corresponds to the beam associated with the remote UE 122 for preamble transmission, e.g. it may be the strongest SSB beam from the gNB 110 towards the remote UE 110, or the Tx beam of the remote UE 122 corresponding to the selected (strongest) SSB beam. In step 702, the relay node 120 indicates the beam index to the gNB 110. It may be capable of doing so after syncing with the gNB in step 605.

In addition to, or instead of the beam index, the remote UE 122 may in step 700 indicate to the relay node 120, and the relay node 120 may in step 702 forward/indicate to the gNB 110 at least one from a group of IEs comprising: RO IDs used by the remote UE 122 in transmission of the RA message(s), a preamble ID used by the remote UE 122 in transmission of the RA message(s), received signal receive power (RSRP) at the remote UE 122, and P_PRACH which is power used for the RA message transmission at the remote UE 122, ID of the remote UE 122. By knowing one or more of these lEs, the gNB 110 may e.g. increase Rx beam gain based on the RSRP, P_CMAX and/or preamble received target power for the correct beam for this remote UE 122.

After receiving such IEs, the gNB 110 may receive the RA message transmitted in step 606 of Figure 7 and transmit a response to the remote UE 122 in step 608. If the gNB cannot receive the relay UE's message in step 702 in the corresponding SSB beam, a new signaling may be needed by the relay node 120 to transmit the preamble ID and RO used by the remote UE 122.

In one embodiment, shown in Figure 8, the gNB 110 is informed for Msg1/Msg3 RO aggregation by the remote UE 122 directly. The Figure is otherwise similar than Figure 6, but step 604B is missing. I.e. the relay node 120 need not inform the gNB 110 about the CovEnh. On the contrary, the relay node 120 requests the remote UE 122 to trigger CovEnh and the remote UE 122 directly indicates similar request to the gNB 110, or starts the RO/slot/symbol aggregation. For example, the remote UE 122 initiates MsglCovEnhRACH by performing a transmission of a random access -preamble, as the RA message, from a predetermined set of random access -preambles reserved for a CE procedure triggering to the gNB 110. This predetermined RA preamble may be a preamble outside of the standard CBRA (group A/B preambles). For example, the remote UE 122 may first use preambles from the know pools of RA preambles. If this fails (possibly known by an indication of step 604A from the relay node 120), the remote UE 122 may use a reserved preamble to indicate to the gNB 110 that the remote UE 122 is coverage challenged and would like to continue the RA in the CovEnh mode. In an embodiment, this type of Msg1 (=preamble) based indication is used if Msg1 (and Msg2) is received and the failure is detected during the transfer of Msg3.

In one embodiment, the remote UE 122 tries CovEnh blindly, e.g., the remote UE 122 never receives Msg2, but still tries a switch blindly to CovEnh mode which may include bundling of the ROs.

Then, the remote UE 122 may perform RA message aggregation by using already allocated ROs or PUSCH slot allocations (for Msg3). The gNB 110 may then receive the Msg1/Msg3 repetition and accumulate the receiving samples from all aggregated ROs/slots to improve the link budget. Consequently, a response from the gNB 110 is sent directly to the remote UE 122.

Owing to the proposed embodiments, the gNB 110 may with higher likelihood decode RACH Msg1 and Msg3 correctly. The relay node 120 may advantageously act as a middleman to inform the gNB 110 of insufficient coverage at the remote UE 122. Moreover, the relay node 120 performance and battery life is not significantly negatively impacted, since messages are not tunnelled/forwarded through the relay node 120. After triggering the coverage enhanced procedure, the communication may resume between the gNB 110 and the remote UE 122, with all the same timing requirements and observed delays as are present in normal 4-step/2-step RACH.

In an embodiment, any one or many of the devices 110, 120, 122 autonomously selects the number of ROs that are required for sufficient aggregation based on (history) data of previous aggregations. For example, the remote UE 122 may autonomously learn how many ROs is required to become aggregated. As another example, the gNB 110 may autonomously learn how much Rx gain should be increased. Both of these may be based on previously stored information, such as parameters, on unsuccessful and/or successful CE procedures. The information of the unsuccessful and/or successful CE procedure parameters are stored in a memory.

Regarding the stored parameters, the UE 122 may store e.g. at least one of the following: P_PRACH, number of required ROs for successful RA procedure, SSB beam ID, RSRP of the SSB or SSBs. The UE 122 may learn these parameters after sufficient number of iterations indicating how many ROs are required to become aggregated for successful RA procedure. The remote UE 122 may select the correct parameters (e.g. an appropriate number of ROs are chosen to get aggregated for) Msg1 repetition and/or an appropriate number of slots/symbols are chosen to get aggregated for Msg3 repetition) from the stored parameters for future Msg1/3CovEnhRACH. With such history data available, a link failure probability may reduce.

The gNB 110 may store parameters of all or some of the UEs sending CovEnhRACH request. The parameters that are stored for each UE may comprise at least one of the following: number of required ROs for successful RA procedure, SSB beam ID, RSRP of the SSB or SSBs, time buffer to receive Msg3, etc. These parameters may be learnt autonomously after sufficient number of iterations, wherein the sufficient number may be predefined or based on experience. This may help the gNB 110 to intelligently increase the Rx beam gain in future and it will increase the probability of receiving Msg3 and/or Msg1.

As said, the gNB 110 and the remote UE 122 may build a memory based on a look-up table (LUT) and may use this knowledge to autonomously adjust the size of RO aggregation and the Rx beam gain increment value through a supervised machine learning (SML) approach. E.g. the remote UE 122 may utilize a SML assisted method to autonomously control the size of ROs as well as slot/symbols aggregations for both Msg1 and Msg3. The gNB 110 can use a knowledge based on previous Msg1/Msg3 CovEnhRACH requests to increase the Rx beam gain of the remote UE efficiently.

An advantage of the proposed approach, that is legacy transparent and only starts in case the traditional RACH procedure fails, may include extension of RACH coverage. In contrast with the conventional relay node characteristics in 3GPP, the embodiments do not employ tunnelling which may lead to reducing the coverage enhancements complexity. That is, the relay node 120 need not suffer from excessive power drain or throughput reduction, since no data is forwarded. The RO aggregation and/or slots/symbols aggregation proposed in the embodiments covers both Msg1 and Msg3 failures along with direct or indirect (via the relay node 120) coverage enhancements methods. Further, the proposed embodiments may avoid excessive RACH repetitions and waste of resources through applying low-complexity machine learning algorithm at the remote UE and at the gNB to set up RO aggregation size and Rx beam gain increase autonomously.

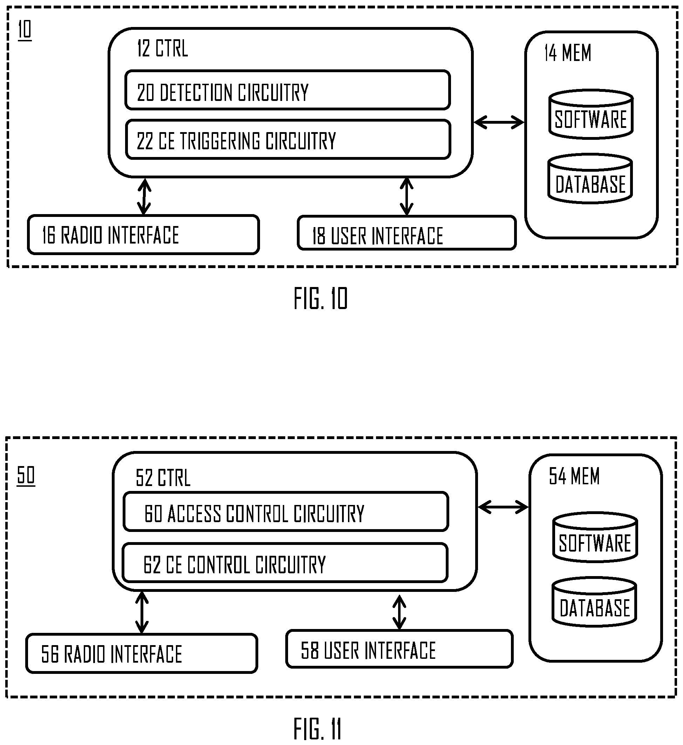

An embodiment, as shown in Figure 10, provides an apparatus 10 comprising a control circuitry (CTRL) 12, such as at least one processor, and at least one memory 14 including a computer program code (software), wherein the at least one memory and the computer program code (software), are configured, with the at least one processor, to cause the apparatus to carry out any one of the above-described processes. The memory may be implemented using any suitable data storage technology, such as semiconductor-based memory devices, flash memory, magnetic memory devices and systems, optical memory devices and systems, fixed memory and removable memory. The memory may comprise a database for storing data.

In an embodiment, the apparatus 10 may comprise the terminal device of a communication system, e.g. a user terminal (UT), a computer (PC), a laptop, a tabloid computer, a cellular phone, a mobile phone, a communicator, a smart phone, a palm computer, a mobile transportation apparatus (such as a car), a household appliance, or any other communication apparatus, commonly called as UE in the description. Alternatively, the apparatus is comprised in such a terminal device. Further, the apparatus may be or comprise a module (to be attached to the UE) providing connectivity, such as a plug-in unit, an "USB dongle", or any other kind of unit. The unit may be installed either inside the UE or attached to the UE with a connector or even wirelessly.

In an embodiment, the apparatus 10 is or is comprised in the relay node 120. The apparatus may be caused to execute some of the functionalities of the above described processes, such as the steps of Figure 3.

The apparatus may further comprise a radio interface (TRX) 16 comprising hardware and/or software for realizing communication connectivity according to one or more communication protocols. The TRX may provide the apparatus with communication capabilities to access the radio access network, for example.

The apparatus may also comprise a user interface 18 comprising, for example, at least one keypad, a microphone, a touch display, a display, a speaker, etc. The user interface may be used to control the apparatus by the user.

The control circuitry 12 may comprise a detection circuitry 20 for detecting wireless RA messages, according to any of the embodiments. The control circuitry 12 may further comprise a CE triggering circuitry 22 for triggering the CE mode at one or both of the remote UE and the access point of the network, according to any of the embodiments.

An embodiment, as shown in Figure 11, provides an apparatus 50 comprising a control circuitry (CTRL) 52, such as at least one processor, and at least one memory 54 including a computer program code (software), wherein the at least one memory and the computer program code (software), are configured, with the at least one processor, to cause the apparatus to carry out any one of the above-described processes. The memory may be implemented using any suitable data storage technology, such as semiconductor-based memory devices, flash memory, magnetic memory devices and systems, optical memory devices and systems, fixed memory and removable memory. The memory may comprise a database for storing data.

In an embodiment, the apparatus 50 may comprise the terminal device of a communication system, e.g. a user terminal (UT), a computer (PC), a laptop, a tabloid computer, a cellular phone, a mobile phone, a communicator, a smart phone, a palm computer, a mobile transportation apparatus (such as a car), a household appliance, or any other communication apparatus, commonly called as UE in the description. Alternatively, the apparatus is comprised in such a terminal device. Further, the apparatus may be or comprise a module (to be attached to the UE) providing connectivity, such as a plug-in unit, an "USB dongle", or any other kind of unit. The unit may be installed either inside the UE or attached to the UE with a connector or even wirelessly. In an embodiment, the apparatus 50 is or is comprised in the remote UE 122. The apparatus may be caused to execute some of the functionalities of the above described processes, such as the steps of Figure 4.

In another embodiment, the apparatus 50 may be or be comprised in a network node, such as in gNB/gNB-CU/gNB-DU of 5G. In an embodiment, the apparatus is or is comprised in the network node 110. The apparatus may be caused to execute some of the functionalities of the above described processes, such as the steps of Figure 5. In an embodiment, a CU-DU (central unit ― distributed unit) architecture is implemented. In such case the apparatus 50 may be comprised in a central unit (e.g. a control unit, an edge cloud server, a server) operatively coupled (e.g. via a wireless or wired network) to a distributed unit (e.g. a remote radio head/node). That is, the central unit (e.g. an edge cloud server) and the radio node may be stand-alone apparatuses communicating with each other via a radio path or via a wired connection. Alternatively, they may be in a same entity communicating via a wired connection, etc. The edge cloud or edge cloud server may serve a plurality of radio nodes or a radio access networks. In an embodiment, at least some of the described processes may be performed by the central unit. In another embodiment, the apparatus may be instead comprised in the distributed unit, and at least some of the described processes may be performed by the distributed unit. In an embodiment, the execution of at least some of the functionalities of the apparatus 50 may be shared between two physically separate devices (DU and CU) forming one operational entity. Therefore, the apparatus may be seen to depict the operational entity comprising one or more physically separate devices for executing at least some of the described processes. In an embodiment, the apparatus controls the execution of the processes, regardless of the location of the apparatus and regardless of where the processes/functions are carried out.

The apparatus may further comprise communication interface (TRX) 56 comprising hardware and/or software for realizing communication connectivity according to one or more communication protocols. The TRX may provide the apparatus with communication capabilities to access the radio access network, for example. The apparatus may also comprise a user interface 58 comprising, for example, at least one keypad, a microphone, a touch display, a display, a speaker, etc. The user interface may be used to control the apparatus by the user.

The control circuitry 52 may comprise an access control circuitry 60 for controlling the access to the network, such as for transmitting and/or monitoring RA messages, according to any of the embodiments. The control circuitry 52 may comprise a CE control circuity 62 e.g. for applying coverage enhancement for the RA procedure, according to any of the embodiments.

In an embodiment, an apparatus carrying out at least some of the embodiments described comprises at least one processor and at least one memory including a computer program code, wherein the at least one memory and the computer program code are configured, with the at least one processor, to cause the apparatus to carry out the functionalities according to any one of the embodiments described. According to an aspect, when the at least one processor executes the computer program code, the computer program code causes the apparatus to carry out the functionalities according to any one of the embodiments described. According to another embodiment, the apparatus carrying out at least some of the embodiments comprises the at least one processor and at least one memory including a computer program code, wherein the at least one processor and the computer program code perform at least some of the functionalities according to any one of the embodiments described. Accordingly, the at least one processor, the memory, and the computer program code form processing means for carrying out at least some of the embodiments described. According to yet another embodiment, the apparatus carrying out at least some of the embodiments comprises a circuitry including at least one processor and at least one memory including computer program code. When activated, the circuitry causes the apparatus to perform the at least some of the functionalities according to any one of the embodiments described.

As used in this application, the term 'circuitry' refers to all of the following: (a) hardware-only circuit implementations, such as implementations in only analog and/or digital circuitry, and (b) combinations of circuits and soft-ware (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying soft-ware and/or firmware. The term 'circuitry' would also cover, for example and if applicable to the particular element, a baseband integrated circuit or applications processor integrated circuit for a mobile phone or a similar integrated circuit in a server, a cellular network device, or another network device.

In an embodiment, at least some of the processes described may be carried out by an apparatus comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface soft-ware, display software, circuit, antenna, antenna circuitry, and circuitry.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. For firmware or software, the implementation can be carried out through modules of at least one chip set (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

Embodiments as described may also be carried out in the form of a computer process defined by a computer program or portions thereof. Embodiments of the methods described may be carried out by executing at least one portion of a computer program comprising corresponding instructions. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. Coding of software for carrying out the embodiments as shown and described is well within the scope of a person of ordinary skill in the art.

Following is a list of some aspects of the invention.

According to a first aspect, there is provided an apparatus comprising at least one processor and at least one memory including computer program code, the at least one memory and computer program code being configured to, with the at least one processor, to cause a first radio device to perform: determining that a random access -procedure between a second radio device and a third radio device is not successful; and informing at least one of the third radio device and the second radio device to trigger a coverage enhancement -procedure for performing the random access -procedure.

Various embodiments of the first aspect may comprise at least one feature from the following bulleted list:
- the determining is based on detecting at least one random access message 1, Msg1, from the second radio device without a corresponding response message from the third radio device
- the determining is based on detecting at least one random access message 3, Msg3, from the second radio device without a corresponding response message from the third radio device
- acquiring information on radio resources that are associated with the second radio device for transmission of the at least one random access -message, wherein the determining that the random access -procedure is not successful is based on monitoring random access -messages during the determined radio resources
- determining that the random access -procedure is not successful is at least partially based on a threshold defining how many random access -messages without a response need to be detected
- informing the third radio device to trigger the coverage enhancement -procedure causes the third radio device to at least one of monitoring for random access -occasion aggregation over several radio resources and increasing beam gain of the beam corresponding to the second radio device
- receiving information from the second radio device regarding the beam corresponding to the second radio device; and indicating the beam corresponding to the second radio device to the third radio device
- informing the second radio device to trigger the coverage enhancement -procedure causes the second radio device to perform a transmission of a random access -message in several radio resources
- informing the second radio device to trigger the coverage enhancement -procedure causes the second radio device to perform a transmission of a random access -preamble, as the random access -message, from a predetermined set of random ac-cess -preambles reserved for a coverage enhancement -procedure

According to a second aspect, there is provided an apparatus comprising at least one processor and at least one memory including computer program code, the at least one memory and computer program code being configured to, with the at least one processor, to cause a second radio device to perform: transmitting at least one random access -message towards a third radio device without receiving a response from the third radio device; receiving from a first radio device, other than the third radio device, an indication to trigger a coverage enhancement -procedure for the random ac-cess -procedure; and applying the coverage enhancement -procedure in the transmission of a random access -message towards the third radio device.

Various embodiments of the second aspect may comprise at least one feature from the following bulleted list:
- after receiving the indication to trigger the coverage enhancement -procedure from the first radio device, transmitting an indication of a beam index to be used for transmission of the random access -message to the first radio device
- the coverage enhancement -procedure comprises transmitting the random access -message in several radio resources
- the transmission of the random access -message in several resources comprises bundling of random access -occasions
- the transmission of the random access -message in several random access -occasions comprises repeating the random access - message in all bundled random access -occasions
- the transmission of the random access -message in several random access -occasions comprises extending the random access - message sequence to cover all bundled random access -occasions
- the several random access -occasions to be used for the transmission are based on a beam index of a synchronization signal block selected by the second radio device for the random access -procedure
- autonomously deciding on the number of radio resources that are required for sufficient aggregation based on previously stored information on unsuccessful and/or successful coverage enhancement -procedures

According to a third aspect, there is provided an apparatus comprising at least one processor and at least one memory including computer program code, the at least one memory and computer program code being configured to, with the at least one processor, to cause a third radio device to perform: receiving from a first radio device an indication to trigger a coverage enhancement -procedure for reception of a random access -message from a second radio device other than the first radio device; and applying the coverage enhancement -procedure in the reception of the random access -message from the second radio device.

Various embodiments of the third aspect may comprise at least one feature from the following bulleted list:
- the coverage enhancement -procedure comprises applying at least one of monitoring for random access -occasion aggregation over several radio resources and increasing beam gain of the beam corresponding to the second radio device
- receiving information from the first radio device regarding the beam corresponding to the second radio device
- transmitting information indicating a threshold defining how many random access -messages without a response need to take place, in order for the random access -procedure to be determined as not successful
- autonomously deciding on the number of radio resources that are required for sufficient aggregation based on previously stored information on unsuccessful and/or successful coverage enhancement -procedures

According to a fourth aspect, there is provided a method at a first radio device, the method comprising: determining that a random access -procedure between a second radio device and a third radio device is not successful; and informing at least one of the third radio device and the second radio device to trigger a coverage enhancement -procedure for performing the random access -procedure. Various embodiments of the fourth aspect may comprise at least one feature from the bulleted list under the first aspect.

According to a fifth aspect, there is provided a method at a second radio device, the method comprising: transmitting at least one random access -message towards a third radio device without receiving a response from the third radio device; receiving from a first radio device, other than the third radio device, an indication to trigger a cover-age enhancement -procedure for the random access -procedure; and applying the coverage enhancement -procedure in the transmission of a random access -message towards the third radio device. Various embodiments of the fifth aspect may comprise at least one feature from the bulleted list under the second aspect.

According to a sixth aspect, there is provided a method at a third radio device, the method comprising: receiving from a first radio device an indication to trigger a coverage enhancement -procedure for reception of a random access -message from a second radio device other than the first radio device; and applying the coverage enhancement -procedure in the reception of the random access -message from the second radio device. Various embodiments of the sixth aspect may comprise at least one feature from the bulleted list under the second aspect.

According to a seventh aspect, there is provided a computer program product embodied on a distribution medium readable by a computer and comprising program instructions which, when loaded into an apparatus, execute the method according to the fourth, fifth or sixth aspect.

According to an eight aspect, there is provided a computer program product embodied on a distribution medium readable by a computer and comprising program instructions which, when loaded into an apparatus, execute the method according to the fourth, fifth or sixth aspect.

According to a ninth aspect, there is provided an apparatus, comprising means for performing the method according to the fourth, fifth or sixth aspect, and/or means configured to cause a user equipment to perform the method according to the fourth, fifth or sixth aspect.

According to a tenth aspect, there is provided computer system, comprising: one or more processors; at least one data storage, and one or more computer program instructions to be executed by the one or more processors in association with the at least one data storage for carrying out the method according to fourth, fifth or sixth aspect.

Even though the invention has been described above with reference to an example according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. An apparatus for a first radio device, comprising means for performing:
determining that a random access -procedure between a second radio device and a third radio device is not successful; and
informing at least one of the third radio device and the second radio device to trigger a coverage enhancement -procedure for performing the random ac-cess -procedure.

2. The apparatus of claim 1, wherein the first radio device is a user equipment, the second radio device is another user equipment and the third radio device is a base station.

3. The apparatus of any of claims 1 to 2, wherein at least one of:
the determining is based on detecting at least one random access message 1, Msg1, from the second radio device without a corresponding response message from the third radio device, or
the determining is based on detecting at least one random access message 3, Msg3, from the second radio device without a corresponding response message from the third radio device.

4. The apparatus of any of claims 1 to 3, wherein the means are further configured for:
acquiring information on radio resources that are associated with the second radio device for transmission of the at least one random access -message, wherein the determining that the random access -procedure is not successful is based on monitoring random access -messages during the determined radio resources.

5. The apparatus of any of claims 1 to 4, wherein the determining that the random access -procedure is not successful is at least partially based on a threshold defining how many random access -messages without a response need to be detected.

6. The apparatus of any of claims 1 to 5, wherein the means are further configured for:
receiving information from the second radio device regarding the beam corresponding to the second radio device; and
indicating the beam corresponding to the second radio device to the third radio device.

7. An apparatus for a second radio device, comprising means for performing:
transmitting at least one random access -message towards a third radio device without receiving a response from the third radio device;
receiving from a first radio device, other than the third radio device, an indication to trigger a coverage enhancement -procedure for the random access - procedure; and
applying the coverage enhancement -procedure in the transmission of the random access -message towards the third radio device.

8. The apparatus of claim 7, wherein the means are further configured for:
after receiving the indication to trigger the coverage enhancement -procedure from the first radio device, transmitting an indication of a beam index to be used for transmission of the random access -message to the first radio device.

9. The apparatus of any of claims 7 to 8, wherein the coverage enhancement -procedure comprises transmitting the random access -message in several radio resources, wherein the transmission of the random access -message in several resources comprises bundling of random access -occasions.

10. The apparatus of claim 9, wherein one of:
the transmission of the random access -message in several random ac-cess -occasions comprises repeating the random access -message in all bundled random access -occasions, or
the transmission of the random access -message in several random ac-cess -occasions comprises extending the random access -message sequence to cover all bundled random access -occasions.

11. The apparatus of any of claims 9 to 10, wherein the several random access -occasions to be used for the transmission are based on a beam index of a synchronization signal block selected by the second radio device for the random access -procedure.

12. An apparatus for a third radio device, comprising means for performing:
receiving from a first radio device an indication to trigger a coverage enhancement -procedure for reception of a random access -message from a second radio device other than the first radio device; and
applying the coverage enhancement -procedure in the reception of the random access -message from the second radio device.

13. The apparatus of claim 12, wherein the coverage enhancement -procedure comprises applying at least one of monitoring for random access -occasion aggregation over several radio resources and increasing beam gain of the beam corresponding to the second radio device.

14. The apparatus of any of claims 12 to 13, wherein the means are further configured for:
receiving information from the first radio device regarding the beam corresponding to the second radio device.

15. The apparatus of any of claims 12 to 14, wherein the means are further configured for:
transmitting information indicating a threshold defining how many random access -messages without a response need to take place, in order for the random access -procedure to be determined as not successful.
